# EUROPEAN PATENT APPLICATION

(11) **EP 4 683 306 A1**
(43) Date of publication of application: **21.01.2026**
(21) Application number: 24188833.8
(22) Date of filing: 16.07.2024
(51) Int. Cl.: H04L 67/142, H04L 67/00, H04W 52/02

(54) **COLLISION HANDLING FOR LP-WUS**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

The disclosure relates to a user equipment, a network node device, and respective methods for a user equipment and a network node. More specifically, the user equipment comprises a transceiver and a circuitry. The circuitry, in operation, determines an unsuccessful reception of a low-power wake-up signal, LP-WUS, in a LP-WUS monitoring occasion. The transceiver, in operation, performs a monitoring behavior based on the determination of the unsuccessful reception.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates low power operation of communication devices.

In an embodiment, the techniques disclosed here feature an apparatus (e.g. a user equipment, UE). The apparatus comprises a transceiver and circuitry. The circuitry, in operation, determines an unsuccessful reception of a low-power wake-up signal, LP-WUS, in a LP-WUS monitoring occasion. The transceiver, in operation, performs a monitoring behavior based on the determination of the unsuccessful reception.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a block diagram of a communication system in accordance with exemplary embodiments of the present disclosure;
- **Fig. 3**: is a block diagram of exemplary circuitry of a communication apparatus in accordance with exemplary embodiments of the present disclosure;
- **Fig. 4**: is a block diagram of exemplary circuitry of a base station in accordance with exemplary embodiments of the present disclosure;
- **Fig. 5**: is a flow chart showing method steps for a user equipment for target UE differentiation for LP-WUS in accordance with exemplary embodiments of the present disclosure;
- **Fig. 6**: is a flow chart showing method steps for a network node for target UE differentiation for LP-WUS in accordance with exemplary embodiments of the present disclosure;
- **Fig. 7**: is a flow chart illustrating an exemplary implementation for target UE differentiation for LP-WUS in case a RRC mode indicated by the LP-WUS aligns with the RRC mode of the UE;
- **Fig. 8**: is a flow chart illustrating an exemplary implementation for target UE differentiation for LP-WUS in case the target UE indicated by the LP-WUS aligns with the UE;
- **Fig. 9**: is a flow chart showing method steps for a user equipment for collision handling for LP-WUS in accordance with exemplary embodiments of the present disclosure;
- **Fig. 10**: is a flow chart showing method steps for a network node for collision handling for LP-WUS in accordance with exemplary embodiments of the present disclosure;
- **Fig. 11**: is a flow chart illustrating an exemplary implementation for collision handling for LP-WUS in case overlapping with other resources happens;
- **Fig. 12**: is a flow chart illustrating an exemplary implementation for collision handling for LP-WUS in case the UE does not detect the LP-WUS;
- **Fig. 13**: shows exemplary functional split options in 5G O-RAN, to which exemplary embodiments of the present disclosure may be applied.

### DETAILED DESCRIPTION

### 5G NR system architecture and protocol stacks

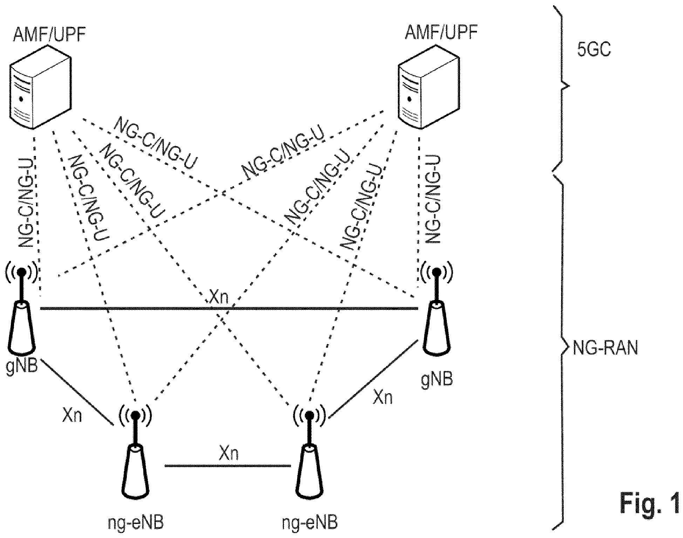

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCl2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB (System Information Block) and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Low power operation

In a low power operation a UE may receive low power radio reference signals. Such a low power radio reference signal may include, for example, at least one or more of a Low Power Wake Up Signal (LP-WUS), a Low Power Synchronization Signal (LP-SS). Moreover, alternatively or in addition, a low power radio reference signal may include any reference signal that is suitable for performing measurements, such as any reference signals, which are defined by a standard. For example, a SSB or a CSI-RS may be used as a reference signal suitable for a measurement. In general, any signal that is suitable for performing measurements may be used as a low power radio reference signal.

An exemplary Low Power Radio (LR) operation may include measurements based on LP-WUS and/or LP-SS, or any legacy reference signal, such as, for example, one or more of a Primary Synchronization Signal (PSS), a Secondary Synchronization Signal (SSS), a physical broadcast channel demodulation reference signal (PBCH DMRS), in any of an RRC inactive mode or an RRC idle mode. Moreover, the LR operation may include measurements based on LP-WUS and/or LP-SS, or any legacy reference signal, such as PSS/SSS/PBCH DMRS in an RRC connected mode. A time and/or frequency tracing may be performed in the LR operation using one or more of a SSB, a CSI-RS, a LP-WUS or a LP-SS. In such an exemplary LR operation a control channel and/or a control signal, such as, for example, an LP-WUS indicating PDCCH monitoring or a paging signal, may be monitored.

In general, the terms "low power" (LP) and "low power radio" (LR) are used as synonyms with throughout the description.

Such a LR operation may be performed as an alternative and/or in addition to a Main Radio operation (MR). For example, a MR operation and a LR operation may use different respective hardware in an UE. For example, a MR operation and a LR operation may use a same hardware in an UE. For example, an UE may comprise a LR transceiver, a LR circuitry, a MR transceiver, and a MR circuitry. For example, said LR transceiver and said LR circuitry may perform the low power operation, whereas the MR transceiver and the MR circuitry may perform the main operation. For example, the LR circuitry and the MR circuitry may be included in a same physical circuity.

In any of said exemplary cases, a MR operation and a LR operation may provide different functionalities of an UE in a respective operational mode. For example, an UE while being in an LR operation mode may perform one or more of the functionalities that are also available in a MR operation mode. The terms "operation", "operational mode", "mode", "state" and "operational state" are used as synonyms with respect to the low power radio and/or the main radio throughout the description.

An exemplary Main Radio (MR) operation may include measurements based on SSBs and/or CSI-RS in any of an RRC inactive mode or an RRC idle mode. Moreover, the MR operation may include measurements based on SSBs and/or CSI-RS in an RRC connected mode. A time and/or frequency tracing may be performed in the MR operation using one or more of a SSB, a CSI-RS, a LP-WUS (Low Power Wake Up Signal) or a LP-SS (Low Power Synchronization Signal). In such an exemplary MR operation a control channel, such as, for example, PDCCH, may be monitored.

In other words, a MR reference signal may include at least one or more of a SSBs and a CSI-RS.

The present invention is not limited by such exemplary MR and LR operations. MR and LR operation, especially time/frequency tracking and control channels monitoring, may or may not be explicitly reflected in a standard specification depending on whether MR or LR hardware to operate one or more of the above function(s), but may only nominate which channel, signal and/or reference signal to receive/monitor/measure. Which channel to be measure, e.g., by RRM measurement, may imply MR or LR operation of one or more other channels.

For example, in LR operation, an UE may use specific low power reference signals. In other words, when the UE performs the low power operation, the receiving of the reference signal includes a receiving of the low power radio (LR) reference signal.

Such a low-power reference signal may include a more simplified waveform (relatively to a non-low-power reference signal). For example, an on-off keying (OOK) modulation and/or a frequency-shift keying (FSK) modulation allow for a lower complexity receiver (relatively to a MR receiver) to receive and monitor said low-power reference signal. Such a low-power reference signal may be, for example, a LP-WUS, which may indicate that UE is to perform a MR operation. Such a low power reference signal may be, for example, LP-SS provides reference signal for time/frequency domain tracking/synchronization and/or RRM measurement.

When the UE does not perform the low power operation, the receiving of the reference signal includes a receiving of a main radio (MR), reference signal. For example, when not performing a low power operation, the UE may perform a MR operation, a combination of MR and LR operation, or the like.

For example, such a MR reference signal may be a SSB and/or a CSI-RS. The present disclosure is not limited to these exemplary reference signals. In general, any other suitable reference signal may be used for performing a measurement.

A switching between LR operation and not LR operation may be performed when a preconfigured condition is fulfilled.

A transitioning between LR operation and MR operation may be seen as a state machine of two states. The two states are represented by the LR operation and the MR operation. When a first preconfigured condition is fulfilled, the UE transitions from the MR operation to the LR operation. For example, the first preconfigured condition may include whether a MR measurement result is higher than a preconfigured threshold. Such a threshold may be defined by a standard, a configuration indication received by the UE, or the like.

For example, such a transitioning to the LR operation may save UE power by offloading measurement to LR operation when the channel condition is good, e.g. not cell edge or the like.

When a second preconfigured condition is fulfilled, the UE according to the exemplary implementation may transition from the LR operation to the MR operation. For example, the second preconfigured condition may include whether a LR measurement result is lower than a predefined threshold, which may be different from the threshold for the transitioning from the MR operation to the LR operation. Similarly as above, such a threshold for the transitioning from the LR operation to the MR operation may be defined by a standard, a configuration that is received by the UE, or the like.

For example, such a transitioning to the MR operation may ensure an accuracy performance of a measurement. Thus, by switching of the states based on a preconfigured condition facilitates UE power saving and maintaining acceptable measurement performance.

### Low-Power Wake-Up Signals, LP-VVUS

An LP-WUS design is commonly applicable to both IDLE/INACTIVE and CONNECTED modes. For example, a OOK (OOK-1 and/or OOK-4) based LP-WUS with overlaid OFDM sequence(s) over OOK symbol may be used. The LP-WUS design shall ensure that for IDLE/INACTIVE operation, the same information is delivered irrespective of a LP-WUR type. The OFDM sequence may carry information.

For IDLE/INACTIVE modes, a configuration of LP-WUS may indicate a paging monitoring triggered by the LP-WUS. UEs monitoring the same LP-WUS monitoring occasion may be divided into multiple subgroups, where LP-WUS can provide wake-up indication for each subgroup.

For CONNECTED mode, procedures may allow UE MR PDCCH monitoring triggered by LP-WUS including activation and deactivation procedure of LP-WUS monitoring.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and SSB-*Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld)*
3) List of CSI-ReportConfig lEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a CSI-*ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of lEs for defining measurement and report according to the CSI framework includes:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

Details for said framework are provided, for example, in 3GPP TS 38.331, section 6.3.2.

### Embodiments

As mentioned above, long active time for receiving and processing reference signals, such as SSBs and CSI-RSs, is the main source of power consumption. Thus, an efficient low power operation of communication devices may be desirable.

The present disclosure in particular provides base stations, which may include scheduling devices or scheduling apparatuses (such as scheduling nodes), corresponding methods for base stations, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

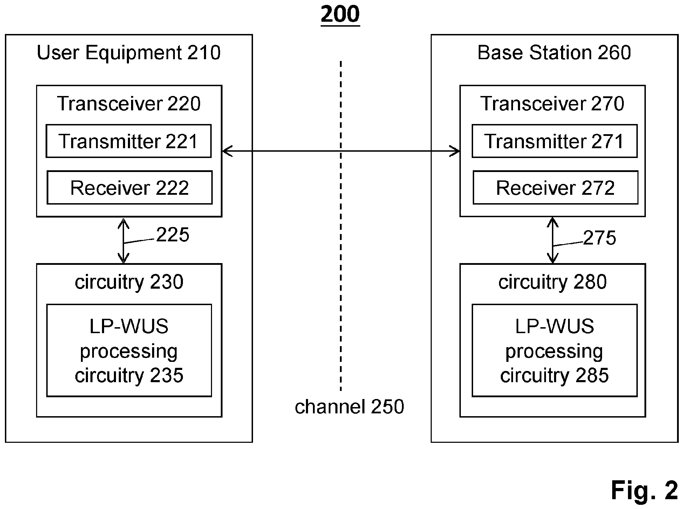

An example of such communication system is illustrated in Fig. 2. The communication system 200 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

Fig. 2 illustrates a general, simplified and exemplary block diagram of a communication apparatus (which may be exemplarily assumed to be a user equipment (UE) 210 or communication terminal or communication apparatus) and a scheduling device or scheduling node (here exemplarily assumed to be located in a base station 260, e.g. in a LTE eNB (alternatively termed ng-eNB) or the gNB in 5G NR) in the communication system 200. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 210 may also be a sensor device, a wearable device, or a connected vehicle, or a controller of an automated machine in an industrial factory.

As illustrated in Fig. 2, the user equipment 210 and the scheduling device or base station 260 (eNB/gNB) may communicate with each other over a (wireless) physical channel 250 respectively using their transceivers 220 (communication apparatus side) and 270 (base station side). Together, the base station 260 and the user equipment 210 may form the communication system 200. The communication system 200 may further include other entities such as those shown in Fig. 1, e.g. a plurality of UEs connected to the base station or a relay node relaying signals to/from the base station from/to one or more UEs, or a plurality of base stations each serving in one or more serving cells.

As illustrated in Fig. 2, the user equipment 210 may comprise a transceiver 220 (e.g. including a transmitter 271 and/or a receiver 272) and circuitry (or processing and/or control circuitry) 230, and the base station 260 may comprise a transceiver 270 (e.g. including a transmitter 271 and/or a receiver 272) and (processing and/or control) circuitry 280.

The term "***transceiver***" refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the exemplary user equipment 210, the circuitry 230 may control the transceiver 220, which may include the transmitter 221 and the receiver 222, to receive and/or transmit data. This is illustrated by an arrow 225 which represents schematically an interface between the circuitry 230 and the transceiver 220, over which the control is performed.

In the exemplary network node 260, the circuitry 280 may control the transceiver 270 to receive and/or transmit data. This is illustrated by an arrow 275, which represents schematically an interface between the circuitry 280 and the transceiver 270, over which the control is performed. For example, the circuitry 280 may instruct 275 the transceiver 270 to transmit the first physical layer signal.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 210 and a base station 260, without implying any limitation to networks such as 3GPPP NR networks.

### Target UE differentiation for LP-WUS

As mentioned above, an efficient low-power operation is desirable. A UE performing a low-power operation may be in any of a RRC_CONNECTED mode, a RRC_IDLE mode or a RRC_INACTIVE mode.

For a RRC CONNECTED mode, a LP-WUS resource is RRC configured. For a RRC_IDLE/RRC_INACTIVE mode, a LP-WUS resource is SIB or NAS (Non-access stratum) configured. Different UEs may share a monitoring occasion or monitor different monitoring occasion depending on different sub-groups of UEs. Thus, it may be desirable to differentiate UEs in low-power operation.

As shown in Fig. 2 (left-hand side), provided is a user equipment (UE) 210. The UE 210 comprises a transceiver 220 and circuitry 230. The transceiver 220, in operation, receives a low-power wake-up signal (LP-WUS) in a LP-WUS monitoring occasion. The LP-WUS may be transmitted from the network node 260 to the UE 210.

The circuitry 230 obtains a target UE identification associated with at least a part of the received LP-WUS. For example, the circuitry may obtains the received LP-WUS from the transceiver. The circuitry may process the received LP-WUS in order to obtain a target UE identification associated with (at least a part of) the received LP-WUS. For example, such a target UE identification may be included in the received LP-WUS.

A LP-WUS may include different parts intended for respective UEs. A LP-WUS may be intended for a single UE. A LP-WUS may be intended for a single group of UEs, wherein the single group may include one or more UEs.

In other words, a target UE may be for example, a specific (certain) UE. For example, a target UE may be a part of a group of target UEs, the group including one or more UEs. For example, a target UE may correspond to a UE having a specific UE state, such as, for example, a RRC state (RRC mode).

For example, a first part of the LP-WUS may be associated with a first target UE or a first group of target UEs. For example, a second part of the LP-WUS may be associated with a second target UE or a second group of target UEs. For example, a part of a LP-WUS may correspond to a part of LP-WUS information (e.g. payload bits). For example, a LP-WUS may be completely associated with a target UE or a group of target UEs. Such a completely associated LP-WUS may not include parts that are directed to UEs different from one or more target UEs.

The target UE identification may include includes an identification of a certain UE, and identification for a group of UEs group, or a UE state.

In case the target UE identification associated with at least a part of the received LP-WUS corresponds to the UE, performs a monitoring behavior based on the at least a part of the received LP-WUS. In other words, the UE checks LP-WUS information for target UE identification.

For example, a monitoring behavior may include monitoring a corresponding paging occasion (PO) or a PDCCH. Such a monitoring behavior may be defined by a standard, a configuration or the like. The configuration may be received from a base station.

When a LP-WUS is successfully received, it may indicate whether or not to monitor a paging occasion or PDCCH. Therefore, it may indicate two possibilities. In another example, in case a LP-WUS is successfully received and triggers a paging or PDCCH monitoring, a RRM measurement may then be performed by the main radio (MR), which was performed by the LP-WUR, low power wake up receiver before.

UEs may be configured with different resources or may be differentiated in the LP-WUS payload information, e.g., in different blocks/field or by different starting position.

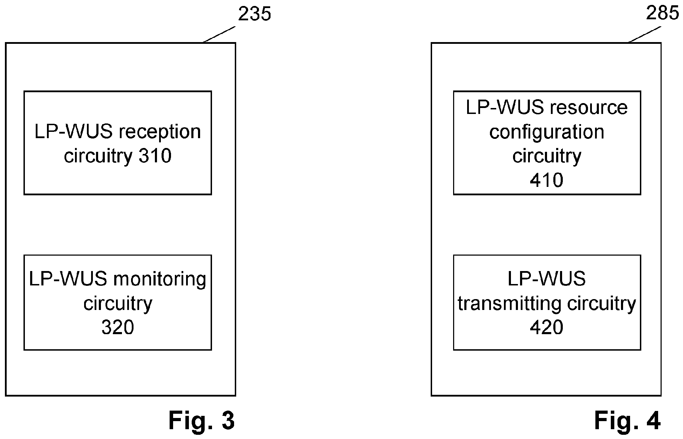

Fig. 3 shows an exemplary functional structure of the circuitry 230, in particular, the circuitry 235 processing a LP-WUS. As shown, the LP-WUS processing circuitry 235 may include a LP-WUS reception circuitry 310. For example, the LP-WUS processing circuitry 235 may include an additional LP-WUS monitoring circuitry 320. More specifically, circuitry 310 may receive a LP-WUS. The LP-WUS monitoring circuitry 320 may monitor a LP-WUS monitoring occasion.

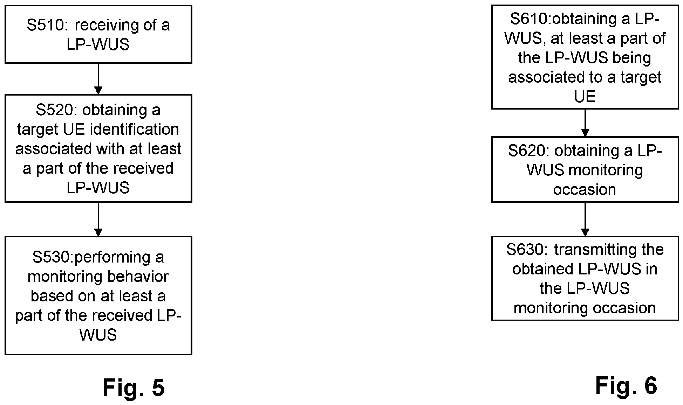

In correspondence with the above-described UE, a method for receiving a low-power wake-up signal, LP-WUS, by a user equipment is provided. As shown in Fig. 5, the method comprises the steps of:
- in a LP-WUS monitoring occasion, receiving S510 a LP-WUS;
- obtaining S520 a target UE identification associated with at least a part of the received LP-WUS, and
- in case the target UE identification associated with at least a part of the received LP-WUS corresponds to the UE, performing S530 a monitoring behavior based on the at least a part of the received LP-WUS.

As further shown in Fig. 2 (right-hand side), also provided is a base station 260. The base station 260 comprises a transceiver 270 and circuitry 280. The circuitry 280, in operation, obtains a low-power wake-up signal, LP-WUS, wherein at least a part of the LP-WUS is associated to a target user equipment, UE. Moreover, the circuitry 280, in operation, obtains a LP-WUS monitoring occasion for transmitting the obtained LP-WUS to one or more UEs. The transceiver 270, in operation, transmits the obtained LP-WUS in the LP-WUS monitoring occasion to the one or more UEs.

Fig. 4 shows an exemplary functional structure of the circuitry 280, in particular, the LP-WUS processing circuitry 285. In particular, the LP-WUS processing circuitry 685 may include LP-WUS resource configuration circuitry 410. For example, the LP-WUS processing circuitry 285 may include an additional LP-WUS transmitting circuitry 420. Circuitry 410 may be responsible for obtaining a LP-WUS resource configuration for a UE 610. Furthermore, circuitry 420 may be responsible for transmitting a LP-WUS.

It is, however, noted that the UE circuitries 230, 235, 310 and 320 as well as gNB circuitries 280, 285 and 420 may implement more functionality than the above-mentioned, and the functionalities mentioned above are in general implemented by circuitries 230 and 280 without being limited to the respective circuitries 235, 410 and 420 or 285 and 420 described above.

Furthermore, in correspondence with the above-described network node 260, a method to be performed by a network node 260 for transmitting a low-power wake-up signal (LP-WUS) is provided. As shown in Fig. 6, the method comprising the step of:
- obtaining S610 a low-power wake-up signal, LP-WUS, wherein at least a part of the LP-WUS is associated to a target user equipment, UE;
- obtaining S620 a LP-WUS monitoring occasion for transmitting the obtained LP-WUS to one or more UEs; and
- transmitting S630 the obtained LP-WUS in the LP-WUS monitoring occasion to the one or more UEs.

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 230 and/or the circuitry 280).

For example, the LP-WUS may include an indication for the target UE identification. Such an indication may associate the received LP-WUS with the UE. Such an indication may be, for example, information included in LP-WUS payload bit(s) (LP-WUS information).

In other words, the indication may be at least one bit in a LP-WUS information. In addition or alternatively, the indication may be a scrambling on a Cyclic Redundancy Check (CRC) of the LP-WUS information.

The at least one bit in the LP-WUS information may be, for example, a flag bit, e.g. a first bit in the LP-WUS information.

In an exemplary implementation, the above bit and/or the mask/scrambling may indicate target UEs of different RRC states. In this exemplary implementation, UE in CONNECTED may process LP-WUS intended for UE in CONNECTED only. A UE in IDLE/INACTIVE may process LP-WUS intended for UE in IDLE/INACTIVE only.

In another exemplary implementation, the above bit and/or the mask/scrambling may indicate target group of UEs. In this exemplary implementation, a UE in group A may process a LP-WUS intended for UE in group A only. A UE in group B may process LP-WUS intended for UE in group B only. Group A or B may explicitly configured or determined by rule according to a UE ID. The present disclosure is not limited to only two groups. More than two groups are possible.

In the obtaining of the UE state associated with at least a part of the received LP-WUS, the circuitry may further determine whether a LP-WUS information decoded from the received LP-WUS corresponds to a current UE state based on a configured starting position. Such a starting position may be, for example, a block index, a starting bit within the payload bits, or the like.

In general, the UE may check the LP-WUS information for target UE identification via at least one of
- a resource configuration of the LP-WUS,
- (at least one) LP-WUS payload bit(s),
- a configured starting position or block index within the LP-WUS payload bits, and/or
- a CRC mask of the LP-WUS payload bits.

UEs may be configured with different resources or may be differentiated in the LP-WUS payload information, e.g., in different blocks/field or by different starting position.

As mentioned above, the target UE identification may refer to a UE state. A UE state may be, for example, a RRC state (RRC mode). In other words, the target UE identification may include a UE state. In case the target UE identification associated with the at least a part of the received LP-WUS corresponds to a current state of the UE, the performing of the monitoring behavior may be further based on a current state of the UE.

A UE may receive and decode a LP-WUS and decides whether the LP-WUS information corresponds to this UE's RRC mode by a configured starting position or a block index for the UE. This means no matter which RRC mode the UE is, the UE may be configured with a starting position or the block index to read the LP-WUS. Network may multiplex different RRC mode UEs within a LP-WUS, by different starting position or block.

For example, the received LP-WUS may include a first part associated with a first UE state and a second part associated with a second UE state. In the obtaining of the UE state associated with at least a part of the received LP-WUS, the circuitry further determines whether the first part or the second part is associated with a current UE state of the UE according to a configured starting position for the UE. As mentioned above such a starting position, may be, for example, a block index.

Such a UE state may be a RRC state. A RRC state may include one of the states RRC_CONNECTED, RRC_IDLE, or RRC_INACTIVE.

In an exemplary implementation, in case the current UE state is a RRC_CONNECTED state and the at least a part of the received LP-WUS is associated with a RRC_CONNECTED state, the monitoring behavior may include monitoring a PDCCH. In case the current UE state is a RRC_IDLE state and the at least a part of the received LP-WUS is associated with a RRC_IDLE state, the monitoring behavior may include a paging monitoring for a RRC_IDLE state. In case the current UE state is a RRC_INACTIVE state and the at least a part of the received LP-WUS is associated with a RRC_INACTIVE state, the monitoring behavior may include a paging monitoring for a RRC_INACTIVE state.

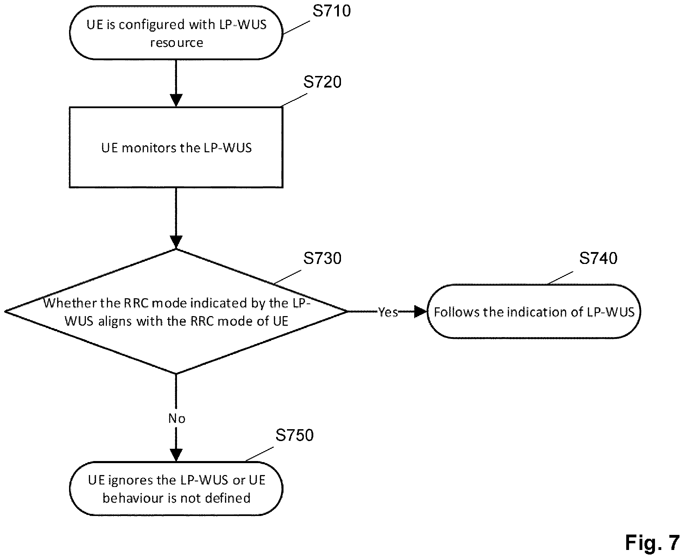

Fig. 7 provides a flowchart of an exemplary implementation for target UE identification. A UE is configured S710 with a LP-WUS resource (monitoring occasion). The UE monitors S720 the LP-WUS monitoring occasion. If the RRC mode (state) indicated by the LP-WUS aligns with the RRC mode of the UE (Yes in S730), the UE follows S740 the indication of the LP-WUS. In other words, the UE may perform any of the monitoring behaviors as explained above. If the RRC mode (state) indicated by the LP-WUS does not correspond to the RRC mode of the UE (No in S730), the UE ignores S750 the LP-WUS or the UE behavior is not defined. For example, the ignorance or undefined UE behavior may be that UE is allowed to ignore the LP-WUS without performing any action according to this LP-WUS. As another example, an undefined UE behavior may lead to an error. For example, an undefined UE behavior may correspond to an UE, which simply may not interpret the bits further in the LP-WUS when the contents is not intended for said UE.

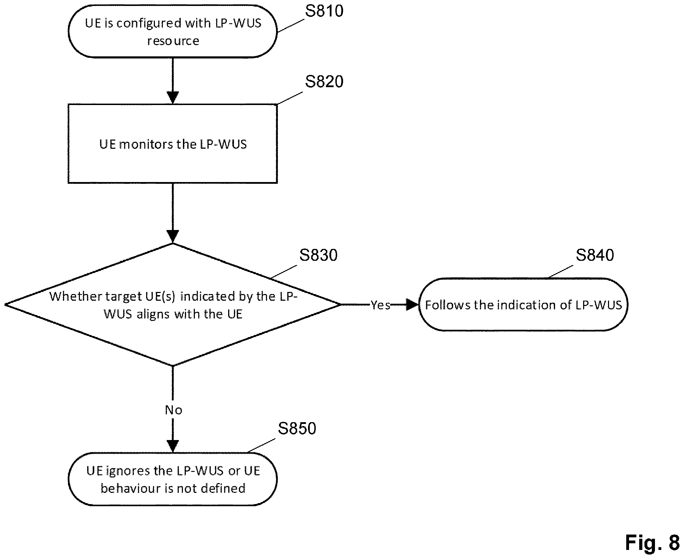

Fig. 8 provides a flowchart of another exemplary implementation for target UE identification. A UE is configured S810 with a LP-WUS resource (monitoring occasion). The UE monitors S820 the LP-WUS monitoring occasion. In case the target UE(s) indicated by the LP-WUS aligns with the UE (Yes in S830), the UE follows S840 the indication of the LP-WUS. In other words, the UE may perform any of the monitoring behaviors as explained above. In case the target UE(s) indicated by the LP-WUS do not correspond to the UE (No in S830), the UE ignores S850 the LP-WUS or the UE behavior is not defined.

Moreover, in addition to the receiving of a LP-WUS in a LP-WUS monitoring occasion, it may happen that a reception of a LP-WUS in a second LP-WUS monitoring occasion may be an unsuccessful reception. In other words, the circuitry, in operation, may determine an unsuccessful reception of a LP-WUS in a second LP-WUS monitoring occasion. The transceiver, in operation, may perform a monitoring behavior based on the determination of the unsuccessful reception.

The second LP-WUS monitoring occasion may be, for example, a subsequent LP-WUS monitoring occasion, i.e. following (in time) a LP-WUS monitoring occasion, in which an unsuccessful reception happened. The second LP-WUS monitoring occasion may be, for example, a previous LP-WUS monitoring occasion, i.e. preceding (in time) a LP-WUS monitoring occasion, in which an unsuccessful reception will happen.

For example, in the performing of the unsuccessful reception, the second LP-WUS monitoring occasion may overlap with a resource for an uplink, a measurement and/or a control channel. For example, the unsuccessful reception may include an unsuccessful detection of a received LP-WUS.

The performing of the monitoring behavior based on the determination of the unsuccessful reception may include, for example in a first exemplary monitoring behavior, monitoring a paging occasion or a PDCCH. The selection for monitoring a paging occasion or a PDCCH may be performed according to a state of the UE, e.g. a RRC state of the UE, or according to a configuration, or according to a standard, or the like. The paging occasion may be a paging occasion corresponding to the respective UE that performs the unsuccessful reception. The PDCCH may be a PDCCH corresponding to the respective UE that performs the unsuccessful reception.

A second exemplary monitoring behavior may include the UE not being required to monitor a paging occasion or a PDCCH. A third exemplary monitoring behavior may include monitoring a subsequent LP-WUS monitoring occasion. Said third exemplary monitoring behavior may be combined with the second exemplary monitoring behavior.

Further details and explanation regarding unsuccessful receptions are given in section *Collision handling for LP-WUS* below. Any of the described methods in section *Collision handling for LP-WUS* may be performed in addition to the steps and methods performed by the UE and/or network node as described in the present section. Such a combination facilitates, for example, a handling of collision and/or misdetection for an unsuccessful reception of a LP-WUS in a second LP-WUS monitoring occasion.

Any of the above-mentioned indications, configurations, configuration indications, associations and/or rules for the target UE identification may be obtained by circuitry included in the network node 260. The network node may transmit any of the obtained indications, configurations, configuration indications, associations and/or rules for the determining of the second cell to the UE 210. For example, the network node 260 may transmit a higher layer configuration for the determining of the second cell to the UE 210. For example, such a higher layer configuration may be a MAC-CE, a RRC configuration, or the like.

### Collision handling for LP-WUS

As mentioned above, an efficient low-power operation is desirable. However, collision or overlapping with another signal/channel or an UL symbol/slot may happen or the UE may not detect the LP-WUS. Thus, it may be desirable to handle such cases efficiently.

As shown in Fig. 2 (left-hand side), provided is a user equipment (UE) 210. The UE 210 comprises a transceiver 220 and circuitry 230. The circuitry 230, in operation, determines an unsuccessful reception of a low-power wake-up signal (LP-WUS) in a LP-WUS monitoring occasion.

An unsuccessful reception may include, for example, a non-reception of the LP-WUS or a received signal may not be identifiable as a LP-WUS. Not receiving a LP-WUS may arise due to an overlap of resources. An overlap may include a partial overlapping, a full overlapping or a collision of resources.

Such determining of an unsuccessful reception may include a monitoring of a LP-WUS monitoring occasion. In said monitoring occasion, there may be no reception of a LP-WUS. Alternatively, a signal may be received, which may not be identified as a LP-WUS. For example, the transmitted LP-WUS may receive bad channel conditions and/or interference. Thus, the signal may not be identified as a LP-WUS at reception.

The performing of an unsuccessful reception may include not monitoring the LP-WUS monitoring occasion. For example, an expected overlap of resources including the LP-WUS monitoring occasion may result in a non-monitoring of said monitoring occasion. In other words, an unsuccessful reception may correspond to an UE not performing the reception, or drop/cancel/omit the reception.

Moreover, the transceiver 220, in operation, performs a monitoring behavior based on the determination of the unsuccessful reception.

Such a monitoring behavior may be defined by a standard, a configuration or the like. The configuration may be received from a base station.

Fig. 3 shows an exemplary functional structure of the circuitry 230, in particular, the circuitry 235 processing a LP-WUS. As shown, the LP-WUS processing circuitry 235 may include a LP-WUS reception circuitry 310. For example, the LP-WUS processing circuitry 235 may include an additional LP-WUS monitoring circuitry 320. More specifically, circuitry 310 may receive a LP-WUS. The LP-WUS monitoring circuitry 320 may monitor a LP-WUS monitoring occasion.

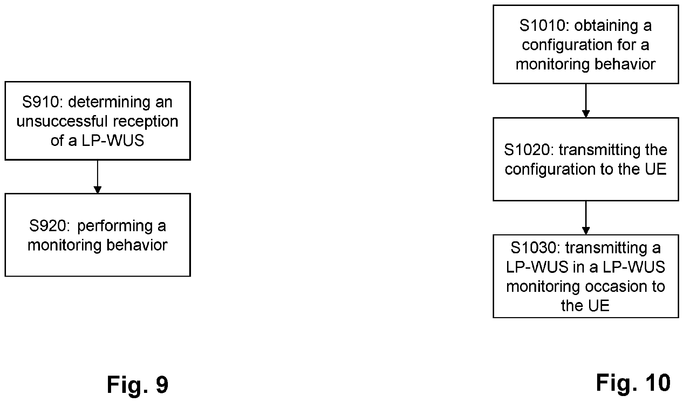

In correspondence with the above-described UE, a method for monitoring a LP-WUS monitoring occasion by a user equipment is provided. As shown in Fig. 9, the method comprises the steps of:
- determining S910 an unsuccessful reception of a low-power wake-up signal, LP-WUS, in a LP-WUS monitoring occasion, and
- performing S920 a monitoring behavior based on the determination of the unsuccessful reception.

As further shown in Fig. 2 (right-hand side), also provided is a base station 260. The base station 260 comprises a transceiver 270 and circuitry 280. The circuitry 280, in operation, obtains a configuration for a monitoring behavior for a UE upon an unsuccessful reception of a low-power wake-up signal, LP-WUS. The transceiver 270, which in operation transmits said configuration to the UE, and transmits a low-power wake-up signal, LP-WUS, in a LP-WUS monitoring occasion to the UE.

Fig. 4 shows an exemplary functional structure of the circuitry 280, in particular, the LP-WUS processing circuitry 285. In particular, the LP-WUS processing circuitry 685 may include LP-WUS resource configuration circuitry 410. For example, the LP-WUS processing circuitry 285 may include an additional LP-WUS transmitting circuitry 420. Circuitry 410 may be responsible for obtaining a LP-WUS resource configuration for a UE 610. Furthermore, circuitry 420 may be responsible for transmitting a LP-WUS.

It is, however, noted that the UE circuitries 230, 235, 310 and 320 as well as gNB circuitries 280, 285 and 420 may implement more functionality than the above-mentioned, and the functionalities mentioned above are in general implemented by circuitries 230 and 280 without being limited to the respective circuitries 235, 410 and 420 or 285 and 420 described above.

Furthermore, in correspondence with the above-described network node 260, a method to be performed by a network node 260 for transmitting a physical layer signal is provided. As shown in Fig. 10, the method comprising the step of:
- obtaining S1010 a configuration for a monitoring behavior for a UE upon an unsuccessful reception of a low-power wake-up signal, LP-WUS,
- transmitting S1020 said configuration to the UE,
- transmitting S1030 a low-power wake-up signal, LP-WUS, in a LP-WUS monitoring occasion to the UE.

In the further description, the details and embodiments apply to each of the user equipment, the network node and the methods unless explicit statement or context indicates otherwise. Moreover, it is noted that any of the steps described below may be included as code instructions in a program, which may be executed by one or more processors (e.g. the circuitry 230 and/or the circuitry 280).

In the performing of the unsuccessful reception by the UE, the LP-WUS monitoring occasion may, for example, overlap with a resource for an uplink, a measurement and/or a control channel. An overlap may include a partial overlapping, a full overlapping or a collision of resources.

Such a resource may be a configured resource. For example, such a resource may include one or more of the following
- a slot,
- a symbol,
- a channel,
- a signal,
- a gap for a measurement, or
- a duration for a measurement.

A scheduling or configuration of such resources may be performed by a scheduling device, according to a configuration, a standard or the like. The scheduling device may be, for example, a base station. The scheduling device may be the same or a different device as the device that schedules and/or transmits an LP-WUS to the UE. The scheduling or configuration of such resources may have overlap with some of the LP-WUS monitoring occasions, if the time/frequency domain resource for all above signal/channel is limited.

For example, the LP-WUS monitoring occasion may overlap with an UL resource, from at least one of the following:
- an applicable time division duplex (TDD) configuration in a radio resource control (RRC),
- an applicable TDD configuration indicated by a downlink control Information (DCI) or MAC CE,
- an applicable UL direction from SBFD (Subband Full Duplex),
- the configured grant (CG) physical uplink shared channel (PUSCH),
- the dynamic grant (DG) PUSCH,
- sounding reference signal (SRS),
- physical random access channel (PRACH),
- physical uplink control channel (PUCCH),
- hybrid automatic repeat request acknowledgement (HARQ-ACK), and/or
- a channel state information (CSI) report.

For example, the LP-WUS monitoring occasion may overlap with a resource for a Layer-1, L1, measurement or a Layer-3, L3, measurement.

For example, the resource for the L1 measurement or the L3 measurement may be one of:
- a slot used for SSB, or
- a slot used for CSI-RS.

In particular, the resource for the L1 measurement or the L3 measurement may be the symbols and/or the REs within a slot used for SSB, or the symbols and/or the REs a slot used for CSI-RS.

SSB and/or CSI-RS may be configured for L1/L3 measurement, where UE measures and receives the signal in a configured time/frequency resource. When LP-WUS is also configured and if the resource overlaps with that of SSB/CSI-RS for L1/L3 measurement, the UE behavior of reception of LP-WUS will be impacted.

For example, the LP-WUS monitoring occasion may overlap with a duration for a Layer-1, L1, measurement or a Layer-3, L3, measurement. Such a duration may be, for example, a gap for a measurement.

For example, the LP-WUS monitoring occasion may overlap with PDCCH and/or PDSCH. Such an overlap may include PDCCH and/or PDSCH for SPS or dynamic grant. Alternatively or in addition, such an overlap may include slot/symbols for POs (Paging Occasions) and/or paging PDSCH.

In general, a collision and/or overlapping may occur in one or more of the following cases:
- the LP-WUS monitoring occasion overlaps with an UL slot, symbol, channel, and/or signal,
- the LP-WUS monitoring occasion overlaps with a slot or symbol used for SSB, for either L1/L3 measurement,
- the LP-WUS monitoring occasion overlaps with a slot or symbol used for CSI-RS, for either L1/L3 measurement,
- the LP-WUS monitoring occasion overlaps with the gap/duration for measurement, for either L1/L3 measurement, and
- the LP-WUS monitoring occasion overlaps with PDCCH and/or PDSCH.

In an exemplary implementation, a LP-WUS monitoring occasion is configured in a downlink (DL) slot based on an applicable TDD configuration in RRC or indicated by DCI. In addition or alternatively, the LP-WUS monitoring occasion configured in a DL slot based may be based on an applicable DL direction from SBFD configuration (indication). In other words, a LP-WUS monitoring occasion may be only configured in DL slots or symbols. In such an exemplary implementation, the UE does not expect the LP-WUS monitoring occasion being configured in any of the UL slots or symbols.

The LP-WUS monitoring occasion configured in a DL slot or symbol may be a current or a subsequent LP-WUS monitoring occasion. In other words, in case of a current LP-WUS monitoring occasion, there may be a miss or a non-reception due to any of the DL cases mentioned above. In case of a subsequent LP-WUS monitoring occasion, the DL resource may be configured as a consequence of a misdetection or overlap.

In an exemplary implementation, a LP-WUS monitoring occasion may be configured in a paired carrier. For example in a FDD case, the LP-WUS may be configured in paired carriers/spectrum only. In such an exemplary implementation, the UE does not expect the LP-WUS monitoring occasion being configured in any of the UL slots or symbols.

The LP-WUS configured in a paired carrier or spectrum may refer to a current or a subsequent LP-WUS monitoring occasion. In other words, in case of a current LP-WUS monitoring occasion, there may be a miss or a non-reception due to any of the DL cases mentioned above. In case of a subsequent LP-WUS monitoring occasion, the paired carrier may be configured as a consequence of a misdetection or overlap.

On the other hand, the UE may receive a signal within a LP-WUS monitoring occasion. In such a case, an unsuccessful reception may arise due to an unsuccessful detection of a received LP-WUS. In other words, the UE may receive a LP-WUS in a LP-WUS monitoring occasion, but a subsequent processing of the LP-WUS may be unsuccessful. For example, the transmitted LP-WUS may receive bad channel conditions and/or interference. Thus, the received signal may not be identified as a LP-WUS. The LP-WUS may be transmitted from the network node 260 to the UE 210.

As mentioned above, based on the determination of the unsuccessful reception, a monitoring behavior is performed. The unsuccessful reception may include any of the exemplary cases mentioned above.

A first exemplary monitoring behavior may include monitoring a paging occasion (PO) or a PDCCH. In other words, when LP-WUS monitoring is impacted, UE by default may start monitoring PO/PDCCH, which may lead to shorter service latency.

The selection for monitoring a paging occasion or a PDCCH may be performed according to a state of the UE, e.g. a RRC state of the UE, or according to a configuration, or according to a standard, or the like. The paging occasion may be a paging occasion corresponding to the respective UE that performs the unsuccessful reception. The PDCCH may be a PDCCH corresponding to the respective UE that performs the unsuccessful reception.

A reception of a LP-WUS may trigger PO monitoring for RRC IDLE/INACTIVE mode of a UE and may trigger PDCCH monitoring for RRC CONNECTED mode of a UE.

A second exemplary monitoring behavior may include the UE not being required to monitor a paging occasion or a PDCCH. Such a second exemplary monitoring behavior may lead to a lower UE power consumption. In such an exemplary implementation, the UE does not need to ramp up to monitor PO/PDCCH.

A third exemplary monitoring behavior may include monitoring a subsequent LP-WUS monitoring occasion. Said third exemplary monitoring behavior may be combined with the second exemplary monitoring behavior. Such a third exemplary monitoring behavior may lead to a lower UE power consumption. In such an exemplary implementation, the UE may not need to ramp up to monitor PO/PDCCH.

Any of the first to third exemplary monitoring behaviors may be configured by a configuration indication received from a base station. In other words, the performing of the monitoring behavior may include receiving a configuration indicating whether to monitor a paging occasion or a PDCCH upon an unsuccessful reception. Such a configuration may enables flexibility and tradeoff to be controlled by the network.

In a fourth exemplary monitoring behavior, the UE behavior may not be specified. Such a behavior facilitates less standardization efforts and specification impact. For example, an unspecified UE behavior may correspond to an UE, which simply may not interpret the bits further in the LP-WUS when the contents is not intended for said UE. And, no particular UE behavior may be required to perform.

In a fifth exemplary monitoring behavior, the UE may not expect any possibility of an unsuccessful reception to happen. Such a behavior may be obtained by an appropriate scheduling of an LP-WUS transmission. For example, an overlap or collision with other resources may be excluded by scheduling of resources. Such an undefined UE behavior may lead to an error.

In addition, the performing of the monitoring behavior may be based on a RRC state of the UE. In other words, a different monitoring behavior may be performed for different RRC states of the UE. Different RRC modes may have different tradeoff of latency and UE power consumption. The requirement on the latency may also be different for different RRC states. It may be beneficial to configure the UE for such different states.

For example, when the UE is in a RRC_CONNECTED state, the monitoring behavior may be a first monitoring behavior. When the UE is in a RRC_IDLE or RRC_INACTIVE state, the monitoring behavior may be a second monitoring behavior.

The second monitoring behavior may be different from first monitoring behavior, or may be the same monitoring behavior. The fist monitoring behavior and/or the second monitoring behavior may be configurable. Such a configuration may be according to a standard, or may be obtained by receiving a configuration indication from a base station.

For example, the first monitoring behavior may include a PDCCH monitoring. For example, the second monitoring behavior may include paging monitoring.

In addition, the UE may receive a LP-WUS in a second LP-WUS monitoring occasion. In particular, the transceiver may receive said LP-WUS in the second LP-WUS monitoring occasion. The second LP-WUS monitoring occasion may be, for example, a subsequent LP-WUS monitoring occasion, i.e. following (in time) a LP-WUS monitoring occasion, in which an unsuccessful reception happened. The second LP-WUS monitoring occasion may be, for example, a previous LP-WUS monitoring occasion, i.e. preceding (in time) a LP-WUS monitoring occasion, in which an unsuccessful reception will happen.

The circuitry, in operation, may further obtain a target UE identification associated with at least a part of the received LP-WUS. In case when the target UE identification associated with at least a part of the received LP-WUS corresponds to the UE, a monitoring behavior based on the at least a part of the received LP-WUS may be performed. The target UE identification as well as the monitoring behavior based on the at least a part of the received LP-WUS are explained in detail in section *Target UE differentiation for LP-WUS* above. Any of the steps described in section *Target UE differentiation for LP-WUS* may be applied in combination with the collision and/or misdetection handling according to the current section. For example, the steps according to section *Target UE differentiation for LP-WUS* may combined with the receiving of the LP-WUS in the second LP-WUS monitoring occasion.

In general, any of the described methods in section *Target UE differentiation for LP-WUS* may be performed in addition to the steps and methods performed by the UE and/or network node as described in the present section. Such a combination facilitates, for example, target UE identification for a reception of a LP-WUS in a second LP-WUS monitoring occasion.

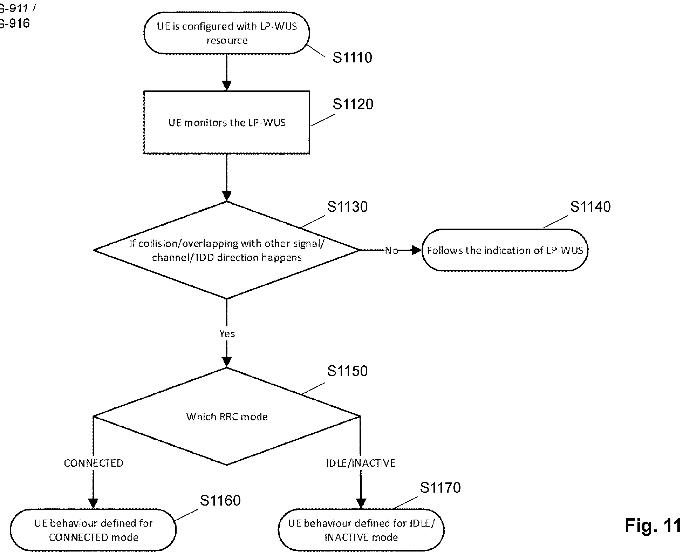

Fig. 11 provides a flowchart of an exemplary implementation for collision (overlap) handling. A UE is configured S1110 with a LP-WUS resource (monitoring occasion). The UE monitors S1120 the LP-WUS monitoring occasion. If no collision and/or overlapping with another signal or channel or TDD direction happens (No in S1130), the UE follows S1140 the indication of the LP-WUS.

If there is a collision and/or overlapping with another signal or channel or TDD direction (Yes in S1130), the RRC mode of the UE is obtained S1150. If the UE is in a connected mode (CONNECTED in S1150, the UE performs S1160 the UE behavior defined for a connected mode. If the UE is in an idle or inactive mode (IDLE/INACTIVE in S1150, the UE performs S1170 the UE behavior defined for an idle/inactive mode. The UE modes may be for example RRC modes (states). A UE behavior may include any of the monitoring behaviors as explained above.

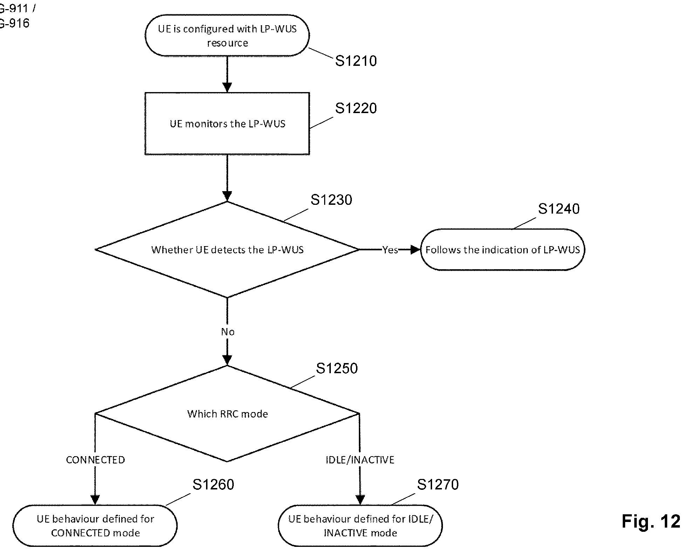

Fig. 12 provides a flowchart of another exemplary implementation for misdetection handling. A UE is configured S1210 with a LP-WUS resource (monitoring occasion). The UE monitors S1220 the LP-WUS monitoring occasion. In case the UE does detect the LP-WUS (Yes in S1230), the UE follows S1240 the indication of the LP-WUS.

In case the UE does not detect the LP-WUS (No in S1230), the RRC mode of the UE is obtained S1250. If the UE is in a connected mode (CONNECTED in S1250, the UE performs S1260 the UE behavior defined for a connected mode. If the UE is in an idle or inactive mode (IDLE/INACTIVE in S1250, the UE performs S1270 the UE behavior defined for an idle/inactive mode. The UE modes may be for example RRC modes (states). A UE behavior may include any of the monitoring behaviors as explained above.

Any of the above-mentioned indications, configurations, configuration indications, associations and/or rules for the collision and/or misdetection handling may be obtained by circuitry included in the network node 260. The network node may transmit any of the obtained indications, configurations, configuration indications, associations and/or rules for the determining of the second cell to the UE 210. For example, the network node 260 may transmit a higher layer configuration for the determining of the second cell to the UE 210. For example, such a higher layer configuration may be a MAC-CE, a RRC configuration, or the like.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### NR Random Access

Random access is a procedure that is performed when a UE establishes a connection with the network, e.g. an initial connection or a connection after a period of inactivity. A logical channel for RACH is called RACH (random access channel), and the corresponding physical random access channel is abbreviated as PRACH. There are different RACH procedures depending on the use case.

RACH in NR includes the concept of RACH occasions, where a plurality of preambles (e.g. 64 preambles) are reused by different frequency and time resources called "RACH occasions" (RO). By a configured mapping between SSBs and ROs, a gNB can determine the SSB to which a UE is associated or linked to. For instance, when beamsweeping is performed, different SSBs are transmitted in different directions and at different timings.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

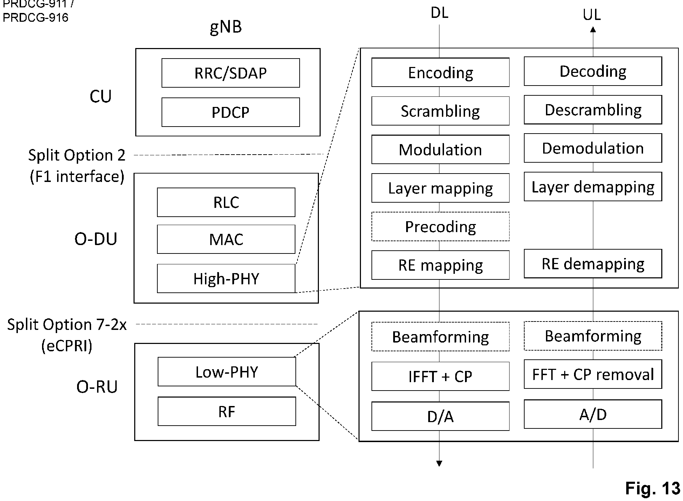

Fig. 13 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (Subband non-overlapping full duplex - SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD - Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (User Equipment)

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a user equipment (UE) is provided. The UE comprises a transceiver and a circuitry. The transceiver, which in operation: in a LP-WUS monitoring occasion, receives a low-power wake-up signal, LP-WUS. The circuitry, which in operation: obtains a target UE identification associated with at least a part of the received LP-WUS, and in case the target UE identification associated with at least a part of the received LP-WUS corresponds to the UE, performs a monitoring behavior based on the at least a part of the received LP-WUS.

The first aspect may be performed individually by the UE. Alternatively, the first aspect may be provided in a second LP-WUS monitoring occasion in addition to any of the thirtieth to forty-second aspects (e.g. similarly as the forty-third aspect).

According to a second aspect provided in addition to the first aspect, the target UE identification includes an identification of a certain UE, and identification for a group of UEs group, or a UE state.

According to a third aspect provided in addition to any of the first or second aspects, the LP-WUS includes an indication for the target UE identification, the indication associates the received LP-WUS with the UE.

According to a fourth aspect provided in addition to any of the second or third aspects, the indication is
- at least one bit in a LP-WUS information, and/or
- a scrambling on a Cyclic Redundancy Check, CRC, of the LP-WUS information.

According to a fifth aspect provided in addition to the first aspect, in the obtaining of target UE identification associated with at least a part of the received LP-WUS, the circuitry further determines whether a LP-WUS information decoded from the received LP-WUS corresponds to a current UE state based on a configured starting position.

According to a sixth aspect provided in addition to any of the first to fifth aspects, the target UE identification includes a UE state, and in case the target UE identification associated with the at least a part of the received LP-WUS corresponds to a current state of the UE, the performing of the monitoring behavior is further based on a current state of the UE.

According to a seventh aspect provided in addition to the sixth aspect, wherein the received LP-WUS includes a first part associated with a first UE state and a second part associated with a second UE state, and wherein, in the obtaining of the target UE identification associated with at least a part of the received LP-WUS, the circuitry further determines whether the first part or the second part is associated with a current UE state of the UE according to a configured starting position for the UE.

According to an eighth aspect provided in addition to any of the sixths or seventh aspects, a UE state is an RRC state, including RRC_CONNECTED, RRC_IDLE, or RRC_INACTIVE.

According to a ninth aspect provided in addition to any of the sixths to eighth aspects, in case the current UE state is a RRC_CONNECTED state and the at least a part of the received LP-WUS is associated with a RRC_CONNECTED state, the monitoring behavior includes monitoring PDCCH; in case the current UE state is a RRC_IDLE state and the at least a part of the received LP-WUS is associated with a RRC_IDLE state, the monitoring behavior includes paging monitoring for a RRC_IDLE state; in case the current UE state is a RRC_INACTIVE state and the at least a part of the received LP-WUS is associated with a RRC_INACTIVE state, the monitoring behavior includes paging monitoring for a RRC_INACTIVE state.

According to a tenth aspect provided in addition to any of the first to ninth aspects, the circuitry in operation: determines an unsuccessful reception of a LP-WUS, in a second LP-WUS monitoring occasion; and the transceiver, in operation, performs a monitoring behavior based on the determination of the unsuccessful reception.

According to a eleventh aspect provided in addition to any of the first to tenth aspects, in the performing of the unsuccessful reception, the second LP-WUS monitoring occasion overlaps with a resource for an uplink, a measurement and/or a control channel, or wherein the unsuccessful reception includes an unsuccessful detection of a received LP-WUS.

According to a twelfth aspect provided in addition to any of the first to eleventh aspects, the performing of the monitoring behavior based on the determination of the unsuccessful reception includes
- monitoring a paging occasion or a PDCCH, or
- the UE not being required to monitor a paging occasion or a PDCCH, or
- monitoring a subsequent LP-WUS monitoring occasion.

According to an eighteenth aspect, a network node is provided. The network node comprises a transceiver and a circuitry. The circuitry, in operation: obtains a low-power wake-up signal, LP-WUS, wherein at least a part of the LP-WUS is associated to a target user equipment, UE; and obtains a LP-WUS monitoring occasion for transmitting the obtained LP-WUS to one or more UEs. The transceiver in operation: transmits the obtained LP-WUS in the LP-WUS monitoring occasion to the one or more UEs.

According to a nineteenth aspect provided in addition to the eighteenth aspect, the at least a part of the LP-WUS is associated to a target user equipment using a target UE identification, the target UE identification includes an identification of a certain UE, and identification for a group of UEs group, or a UE state.

According to a twentieth aspect provided in addition to the nineteenth aspect, the LP-WUS includes an indication for the target UE identification, the indication associates the received LP-WUS with the UE.

According to a twenty-first aspect provided in addition to any of the nineteenth or twentieth aspects, the indication is
- at least one bit in a LP-WUS information, and/or
- a scrambling on a Cyclic Redundancy Check, CRC, of the LP-WUS information.

According to a twenty-second aspect provided in addition to any of the eighteenth to twenty-first aspects, the target UE identification includes a UE state, and in case the target UE identification associated with the at least a part of the received LP-WUS corresponds to a current state of the UE, the performing of the monitoring behavior is further based on a current state of the UE.

According to a twenty-third aspect provided in addition to the twenty-second aspect, a UE state is an RRC state, including RRC_CONNECTED, RRC_IDLE, or RRC_INACTIVE.

According to a twenty-fourth aspect, a method for a user equipment, UE, is provided. The method comprises: in a LP-WUS monitoring occasion, receiving a LP-WUS; obtaining a target UE identification associated with at least a part of the received LP-WUS; and in case the target UE identification associated with at least a part of the received LP-WUS corresponds to the UE, performing a monitoring behavior based on the at least a part of the received LP-WUS.

According to a twenty-fifth aspect, a method for a network node is provided. The method comprises: obtaining a low-power wake-up signal, LP-WUS, wherein at least a part of the LP-WUS is associated to a target user equipment, UE; obtaining a LP-WUS monitoring occasion for transmitting the obtained LP-WUS to one or more UEs; and transmitting the obtained LP-WUS in the LP-WUS monitoring occasion to the one or more UEs.

According to a twenty-sixth aspect, an integrated circuit is provided, which, in operation, controls a process of a user equipment, the process comprising the following steps performed by the user equipment: in a LP-WUS monitoring occasion, receiving a LP-WUS; obtaining a target UE identification associated with at least a part of the received LP-WUS; and in case the target UE identification associated with at least a part of the received LP-WUS corresponds to the UE, performing a monitoring behavior based on the at least a part of the received LP-WUS.

According to a twenty-seventh aspect an integrated circuit is provided, which, in operation, controls a process of a network node, the process comprising the following steps performed by the network node: obtaining a low-power wake-up signal, LP-WUS, wherein at least a part of the LP-WUS is associated to a target user equipment, UE; obtaining a LP-WUS monitoring occasion for transmitting the obtained LP-WUS to one or more UEs; and transmitting the obtained LP-WUS in the LP-WUS monitoring occasion to the one or more UEs.

According to a twenty-eighth aspect, a program stored on a storage medium and including code instructions, which, when executed on one or more processors of a user equipment, cause the one or more processors to execute the following steps: in a LP-WUS monitoring occasion, receiving a LP-WUS; obtaining a target UE identification associated with at least a part of the received LP-WUS; and in case the target UE identification associated with at least a part of the received LP-WUS corresponds to the UE, performing a monitoring behavior based on the at least a part of the received LP-WUS.

According to a twenty-ninth aspect, a program stored on a storage medium and including code instructions, which, when executed on one or more processors of a network node, cause the one or more processors to execute the following steps: obtaining a low-power wake-up signal, LP-WUS, wherein at least a part of the LP-WUS is associated to a target user equipment, UE; obtaining a LP-WUS monitoring occasion for transmitting the obtained LP-WUS to one or more UEs; and transmitting the obtained LP-WUS in the LP-WUS monitoring occasion to the one or more UEs.

Summarizing, the disclosure relates to a user equipment, a network node device, and respective methods for a user equipment and a network node. More specifically, the user equipment comprises a transceiver and a circuitry. The transceiver, in operation, receives a low-power wake-up signal, LP-WUS, in a LP-WUS monitoring occasion. The circuitry, in operation, obtains a target UE identification associated with at least a part of the received LP-WUS, in case the target UE identification associated with at least a part of the received LP-WUS corresponds to the UE, performs a monitoring behavior based on the at least a part of the received LP-WUS.

According to a thirtieth aspect, a user equipment (UE) is provided. The UE comprises a transceiver and a circuitry. The circuitry, in operation: determines an unsuccessful reception of a low-power wake-up signal, LP-WUS, in a LP-WUS monitoring occasion. The transceiver, in operation: performs a monitoring behavior based on the determination of the unsuccessful reception.

The thirtieth aspect may be performed individually by the UE. Alternatively, the thirtieth aspect may be provided in a second LP-WUS monitoring occasion in addition to any of the first to ninth aspects (e.g. similarly as the tenth aspect).

According to a thirty-first aspect provided in addition to the thirtieth aspect, in the performing of the unsuccessful reception, the LP-WUS monitoring occasion overlaps with a resource for an uplink, a measurement and/or a control channel.

According to a thirty-second aspect provided in addition to any of the thirtieth or thirty-first aspects, the LP-WUS monitoring occasion overlaps with a resource for a Layer-1, L1, measurement or a Layer-3, L3, measurement.

According to a thirty-third aspect provided in addition to any of the thirtieth to t thirty-second hird aspect, the LP-WUS monitoring occasion overlaps with a duration for a L1 measurement or a L3 measurement.

According to a thirty-fourth aspect provided in addition to any of the thirtieth to thirty-third aspects, the LP-WUS monitoring occasion overlaps with a physical downlink control channel, PDCCH, and/or a physical downlink shared channel, PDSCH.

According to a thirty-fifth aspect provided in addition to any of the thirtieth to thirty-fourth aspects, the LP-WUS monitoring occasion overlaps with a uplink, UL, resource, the UL resource including at least one of
- an applicable time division duplex, TDD, configuration in a radio resource control, RRC,
- an applicable TDD configuration indicated by a downlink control Information, DCI, or a medium access control, MAC, control element CE,
- an applicable UL direction from Subband Full Duplex, SBFD,
- a configured grant, CG, physical uplink shared channel, PUSCH,
- a dynamic grant, DG, PUSCH,
- a sounding reference signal, SRS,
- a physical random access channel, PRACH,
- a physical uplink control channel, PUCCH,
- a hybrid automatic repeat request acknowledgement, HARQ-ACK, or
- a channel state information, CSI, report.

According to a thirty-sixth aspect provided in addition to any of the thirtieth to thirty-fourth aspects, a LP-WUS monitoring occasion is configured in a DL slot based on at least one of:
- an applicable TDD configuration in RRC or indicated by DCI
- an applicable DL direction from SBFD configuration

According to a thirty-seventh aspect provided in addition to any of the thirtieth to thirty-fourth aspects, a LP-WUS monitoring occasion is configured in a paired carrier.

According to a thirty-eighth aspect provided in addition to any of the thirtieth to thirty-seventh aspects, the unsuccessful reception includes an unsuccessful detection of a received LP-WUS.

According to a thirty-ninth aspect provided in addition to any of the thirtieth to thirty-eighth aspects, the performing of the monitoring behavior includes
- monitoring a paging occasion or a PDCCH, or
- the UE not being required to monitor a paging occasion or a PDCCH, or
- monitoring a subsequent LP-WUS monitoring occasion.

According to a fortieth aspect provided in addition to any of the thirtieth to thirty-ninth aspects, the performing of the monitoring behavior includes receiving a configuration indicating whether to monitor a paging occasion or a PDCCH upon an unsuccessful reception.

According to a forty-first aspect provided in addition to any of the thirtieth to fortieth aspects, the performing of the monitoring behavior is further based on a RRC state of the UE.

According to a forty-second aspect provided in addition to any of the thirtieth to forty-first aspects, when the UE is in a RRC_CONNECTED state, the monitoring behavior is a first monitoring behavior, and when the UE is in a RRC_IDLE or RRC_INACTIVE state, the monitoring behavior is a second monitoring behavior.

According to a forty-third aspect provided in addition to any of the thirtieth to forty-second aspects, the transceiver, in operation, further receives a LP-WUS in a second LP-WUS monitoring occasion; and the circuitry, in operation, further obtains a target UE identification associated with at least a part of the received LP-WUS, in case when the target UE identification associated with at least a part of the received LP-WUS corresponds to the UE, performs a monitoring behavior based on the at least a part of the received LP-WUS. According to a forty-fourth aspect, a network node is provided. The network node comprises a transceiver and a circuitry. The circuitry, in operation: obtains a configuration for a monitoring behavior for a UE upon an unsuccessful reception of a low-power wake-up signal, LP-WUS. The transceiver, in operation: transmits said configuration to the UE; and transmits a low-power wake-up signal, LP-WUS, in a LP-WUS monitoring occasion to the UE.

According to a forty-fifth aspect provided in addition to the forty-fourth aspect, the unsuccessful reception includes an LP-WUS monitoring occasion overlapping with a resource for an uplink, a measurement and/or a control channel.

According to a forty-sixth aspect provided in addition to any of the forty-fourth to forty-fifth aspects, the unsuccessful reception includes an unsuccessful detection of a received LP-WUS.

According to a forty-seventh aspect provided in addition to any of the forty-fourth to forty-sixth aspects, the monitoring behavior includes
- monitoring a paging occasion or a PDCCH, or
- the UE not being required to monitor a paging occasion or a PDCCH, or
- monitoring a subsequent LP-WUS monitoring occasion.

According to a forty-eighth aspect provided in addition to any of the forty-fourth to forty-seventh aspects, the performing of the monitoring behavior is further based on a RRC state of the UE.

According to a forty-ninth aspect, a method for a user equipment, UE, is provided. The method comprises
- determining an unsuccessful reception of a low-power wake-up signal, LP-WUS, in a LP-WUS monitoring occasion, and
- performing a monitoring behavior based on the determination of the unsuccessful reception.

According to a fiftieth aspect, a method for a network node is provided. The method comprises
- obtaining a configuration for a monitoring behavior for a UE upon an unsuccessful reception of a low-power wake-up signal, LP-WUS,
- transmitting said configuration to the UE,
- transmitting a low-power wake-up signal, LP-WUS, in a LP-WUS monitoring occasion to the UE.

According to a fifty-first aspect, an integrated circuit is provided, which, in operation, controls a process of a user equipment, the process comprising the following steps performed by the user equipment:
- determining an unsuccessful reception of a low-power wake-up signal, LP-WUS, in a LP-WUS monitoring occasion, and
- performing a monitoring behavior based on the determination of the unsuccessful reception.

According to a fifty-second aspect an integrated circuit is provided, which, in operation, controls a process of a network node, the process comprising the following steps performed by the network node:
- obtaining a configuration for a monitoring behavior for a UE upon an unsuccessful reception of a low-power wake-up signal, LP-WUS,
- transmitting said configuration to the UE,
- transmitting a low-power wake-up signal, LP-WUS, in a LP-WUS monitoring occasion to the UE.

According to a fifty-third aspect, a program stored on a storage medium and including code instructions, which, when executed on one or more processors of a user equipment, cause the one or more processors to execute the following steps:
- determining an unsuccessful reception of a low-power wake-up signal, LP-WUS, in a LP-WUS monitoring occasion, and
- performing a monitoring behavior based on the determination of the unsuccessful reception.

According to a fifty-fourth aspect, a program stored on a storage medium and including code instructions, which, when executed on one or more processors of a network node, cause the one or more processors to execute the following steps:
- obtaining a configuration for a monitoring behavior for a UE upon an unsuccessful reception of a low-power wake-up signal, LP-WUS,
- transmitting said configuration to the UE,
- transmitting a low-power wake-up signal, LP-WUS, in a LP-WUS monitoring occasion to the UE.

Summarizing, the disclosure relates to a user equipment, a network node device, and respective methods for a user equipment and a network node. More specifically, the user equipment comprises a transceiver and a circuitry. The circuitry, in operation, determines an unsuccessful reception of a low-power wake-up signal, LP-WUS, in a LP-WUS monitoring occasion. The transceiver, in operation, performs a monitoring behavior based on the determination of the unsuccessful reception.

## Claims

1. A user equipment, UE, comprising:
circuitry, which in operation:
determines an unsuccessful reception of a low-power wake-up signal, LP-WUS, in a LP-WUS monitoring occasion; and
a transceiver, which in operation:
performs a monitoring behavior based on the determination of the unsuccessful reception.

2. The UE according to claim 1, wherein in the performing of the unsuccessful reception, the LP-WUS monitoring occasion overlaps with a resource for an uplink, a measurement and/or a control channel.

3. The UE according to any of claims 1 to 2, wherein the LP-WUS monitoring occasion overlaps with a resource for a Layer-1, L1, measurement or a Layer-3, L3, measurement.

4. The UE according to any of claims 1 to 3, wherein the LP-WUS monitoring occasion overlaps with a duration for a L1 measurement or a L3 measurement.

5. The UE according to any of claims 1 to 4, wherein the LP-WUS monitoring occasion overlaps with a physical downlink control channel, PDCCH, and/or a physical downlink shared channel, PDSCH.

6. The UE according to any of claims 1 to 5, wherein the LP-WUS monitoring occasion overlaps with a uplink, UL, resource, the UL resource including at least one of
- an applicable time division duplex, TDD, configuration in a radio resource control, RRC,
- an applicable TDD configuration indicated by a downlink control Information, DCI, or a medium access control, MAC, control element CE,
- an applicable UL direction from Subband Full Duplex, SBFD,
- a configured grant, CG, physical uplink shared channel, PUSCH,
- a dynamic grant, DG, PUSCH,
- a sounding reference signal, SRS,
- a physical random access channel, PRACH,
- a physical uplink control channel, PUCCH,
- a hybrid automatic repeat request acknowledgement, HARQ-ACK, or
- a channel state information, CSI, report.

7. The UE according to any of claims 1 to 5, wherein a LP-WUS monitoring occasion is configured in a DL slot based on at least one of:
- an applicable TDD configuration in RRC or indicated by DCI
- an applicable DL direction from SBFD configuration

8. The UE according to any of claims 1 to 5, wherein a LP-WUS monitoring occasion is configured in a paired carrier.

9. The UE according to any of claims 1 to 8, wherein the unsuccessful reception includes an unsuccessful detection of a received LP-WUS.

10. The UE according to any of claims 1 to 9, wherein the performing of the monitoring behavior includes
- monitoring a paging occasion or a PDCCH, or
- the UE not being required to monitor a paging occasion or a PDCCH, or
- monitoring a subsequent LP-WUS monitoring occasion.

11. The UE according to any of claims 1 to 10, wherein the performing of the monitoring behavior includes receiving a configuration indicating whether to monitor a paging occasion or a PDCCH upon an unsuccessful reception.

12. The UE according to any of claims 1 to 11, wherein the performing of the monitoring behavior is further based on a RRC state of the UE.

13. The UE according to any of claims 1 to 12, wherein, when the UE is in a RRC_CONNECTED state, the monitoring behavior is a first monitoring behavior, and when the UE is in a RRC_IDLE or RRC_INACTIVE state, the monitoring behavior is a second monitoring behavior.

14. The UE according to any of claims 1 to 13, wherein the transceiver, in operation, further receives a LP-WUS in a second LP-WUS monitoring occasion, and
the circuitry, in operation, further
obtains a target UE identification associated with at least a part of the received LP-WUS,
in case when the target UE identification associated with at least a part of the received LP-WUS corresponds to the UE, performs a monitoring behavior based on the at least a part of the received LP-WUS.

15. A network node, comprising:
circuitry, which in operation:
obtains a configuration for a monitoring behavior for a UE upon an unsuccessful reception of a low-power wake-up signal, LP-WUS,
a transceiver, which in operation:
transmits said configuration to the UE, and
transmits a low-power wake-up signal, LP-WUS, in a LP-WUS monitoring occasion to the UE.
